# DEMANDE DE BREVET EUROPEEN

(11) **EP 0 663 782 A1**
(43) Date de publication de la demande: **19.07.1995**
(21) Numéro de dépôt: 94400103.1
(22) Date de dépôt: 14.01.1994
(51) Int. Cl.: H04Q 1/14

(54) **Système de répartition de cables**

(71) Demandeur: Société Anonyme, ASSISTANCE RESEAU ET IMPLANTATION INFORMATIQUE A.R.2.I., F-94263 Fresnes, Val de Marne (FR)
(72) Inventeur: Rivet, Alain Henri, Paris 16ème (FR)
(74) Mandataire: Rataboul, Michel Charles

(57) **Abrégé**

L'installation de l'invention concerne la connexion d'appareils déplaçables tels qu'ordinateurs.

Elle est caractérisée en ce que chaque châssis (31) porte plusieurs modules individuels (32) qui sont amovibles indépendamment les uns des autres et qui comprennent chacun:
. sur leur face arrière (5) au moins une prise (13-16) pour au moins un connecteur (17-18) relié soit au réseau extérieur (6), en vue d'alimenter un module individuel (32) déterminé et constituant une "ressource", soit au réseau intérieur (7a-7b), en vue du raccordement d'un connecteur et constituant une "destination",
. sur leur face avant (4) des prises (12) pour des connecteurs (20) destinés à relier entre elles deux desdites prises (12) de la face avant (4), dont l'une est située sur un module (32) de ressource et l'autre sur un module (32) de destination.

## Description

La présente invention concerne l'équipement de locaux dans lesquels se trouvent des appareils devant être reliés à au moins un réseau extérieur : téléphone, télévidéo, télématique, etc.

Dans la description qui suit, "réseau extérieur" désigne indifféremment un seul ou plusieurs réseaux distincts car l'invention se caractérise par un nouveau système de connexion et il est inutile de différencier les différents réseaux pouvant exister. Le réseau est considéré comme extérieur jusqu'à sa liaison avec des connexions de tout type connu prévues dans un boitier également de type connu.

Le problème que résout l'invention est celui de la connexion facile du réseau extérieur à un réseau intérieur et de la connexion de différents appareils qui font partie de ce réseau intérieur malgré le fait que ces appareils puissent être déplacés.

Naturellement, on sait déjà réaliser de telles liaisons au moyen de conducteurs munis de connecteurs mais ces liaisons sont à la fois complexes, longues à réaliser et pratiquement impossibles à modifier après qu'elles aient été effectuées selon le schéma d'origine lorsqu'il s'agit des connexions individuelles, appareil par appareil.

Ainsi actuellement, on connaît des installations qui comprennent une enceinte telle qu'une armoire, ou "baie", ayant une porte de fermeture extérieure et, à l'intérieur, un tableau pivotant dont une face dite "face arrière" est dissimulée quand le tableau est en position d'usage normal et dont une face dite "face avant" est au contraire exposée et directement accessible dans cette même position du tableau.

La face arrière comporte des connexions généralement fil par fil, notamment des plots autodénudants avec poussoir d'insertion, tandis que la face avant présente des prises normalisées alimentées directement par les conducteurs connectés sur la face arrière.

Les faces avant et arrière sont constituées par des modules juxtaposés et normalisés en hauteur et en largeur afin de former le tableau pivotant tout entier par juxtaposition de modules fixés à un cadre et faisant toute la largeur du tableau pivotant, généralement 48 centimètres environ (19 pouces, en mesures anciennes).

Les jonctions entre les différents modules nécessitent la présence de centaines de conducteurs sur la face avant, laquelle disparaît complètement sous d'épaisses nappes de fils, de sorte que pour lire les repères prévus en regard des connexions, il faut soulever plusieurs nappes successives de fils pour apercevoir ces repères un par un, toute vue d'ensemble du tableau étant absolument impossible.

On comprend que même si l'on se résigne à une réalisation d'origine longue, compliquée et coûteuse, il est difficile d'accepter une maintenance aussi difficultueuse et une quasi impossibilité de modification des branchements.

La présente invention apporte une solution nouvelle à ce problème de connexion et permet de modifier ad libitum l'emplacement de tous les appareils sans avoir à procéder à des branchements et débranchements, seuls des déplacements de fiches normalisées dans des prises assurant les nouvelles connexions.

A cette fin, l'invention a pour objet une i nstallation pour la connexion d'appareils déplaçables tels qu'ordinateurs, récepteurs vidéo, combinés téléphoniques et autres, à un réseau fixe dit "intérieur" de conducteurs devant aboutir chacun à une prise éloignée destinée à l'un desdits appareils, alimenté par au moins un réseau fixe dit "extérieur" tel qu'un réseau téléphonique, un réseau câblé de vidéo et autres,
- du type comprenant une enceinte dans laquelle se trouve un tableau monté pivotant ayant une face dite "avant" et une face dite "arrière", tableau qui est constitué par un cadre devant porter des châssis destinés à recevoir des modules formés chacun par un support ayant deux faces opposées, l'une dite "face avant" et l'autre "face arrière", ces deux faces portant chacune au moins une prise pour un connecteur,
- caractérisée en ce que chaque châssis porte plusieurs modules individuels qui sont amovibles indépendamment les uns des autres et qui comprennent chacun :
   . sur leur face arrière au moins une prise pour au moins un connecteur situé à l'extrémité d'un câble, relié soit au réseau extérieur, en vue d'alimenter un module individuel déterminé et constituant une "ressource", soit au réseau intérieur, en vue du raccordement d'un connecteur et constituant une "destination",
   . sur leur face avant des prises pour des connecteurs situés aux extrémités de conducteurs destinés à relier entre elles deux desdites prises de la face avant, dont l'une est située sur un module de ressource et l'autre sur un module de destination,
les prises de la face avant de chaque module individuel étant reliées aux prises de la face arrière du même module individuel soit directement, soit par au moins un circuit spécifique, de telle manière que les modules reliés au réseau extérieur et les modules reliés au réseau intérieur constituent deux groupes disposés concentriquement l'un à l'autre, à l'intérieur du cadre du tableau.

Selon d'autres caractéristiques de l'invention :
- les châssis sont traversés de passages devant recevoir des organes amovibles tels que des vis pour leur fixation au cadre du tableau quel que soit le nombre de modules qu'ils portent effectivement;
- les châssis sont constitués par des panneaux rectangulaires
   . ayant une face avant et une face arrière,
   . qui sont traversés de fenêtres de dimensions voulues pour laisser apparaître chacune la face avant d'un module susceptible d'être placé contre la face arrière desdits châssis
   . et qui présentent deux ailes latérales devant être appliquées contre deux bords opposés du cadre du tableau, ces ailes étant traversées par les passages des organes amovibles;
- chaque module possède une plaque traversée de trous et les châssis présentent des rebords également traversés de trous disposés de telle manière que des trous des plaques soient situés en regard de trous des rebords, afin de livrer passage à des organes de fixation;
- la plaque des modules porte un circuit du genre dit "circuit imprimé" constituant le circuit individuel de chaque module;
- certains au moins des modules en place comportent sur leur face arrière des prises destinées à des connecteurs solidaires non de câbles mais de la face avant d'un module dit "d'adaptation" dont la face arrière est munie de prises, afin de pouvoir placer sélectivement sur la face arrière de ces modules en place des modules d'adaptation interchangeables dont le circuit et les prises sont adaptés aux appareils devant être alimentés à partir de ces modules en place;
- chacune des fenêtres de châssis démunie de module, est masquée par une plaque d'obturation fixée de manière amovible sur la face arrière du châssis, par les mêmes moyens que ceux utilisés pour fixer un module.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique montrant une connexion complète, considérée par la face avant d'un tableau situé dans une armoire ou "baie".

La figure 2 est une vue schématique montrant une connexion complète, considérée par la face arrière du même tableau.

La figure 3 est une vue schématique de face d'un tableau conforme à l'invention.

La figure 6 est une vue schématique partielle du tableau de la figure 3, limitée au module supérieur vue du côté de la face avant.

La figure 7 est une vue schématique partielle du tableau de la figure 3, limitée au module supérieur vue du côté de la face arrière.

La figure 8 est une vue schématique montrant les deux faces d'un module interchangeable susceptible d'être placé sur un autre module assujetti à un châssis.

La figure 9 est une vue schématique montrant les deux faces d'un autre module interchangeable susceptible d'être placé sur le même module assujetti à un châssis.

La figure 10 est une vue schématique en coupe faite selon la ligne X-X de la figure 7.

La figure 11 est une vue schématique en coupe faite selon la ligne XI-XI de la figure 7.

La figure 12 est une vue schématique en coupe montrant le cas où le module assujetti à un châssis est connecté à un module interchangeable du type de celui de la figure 8.

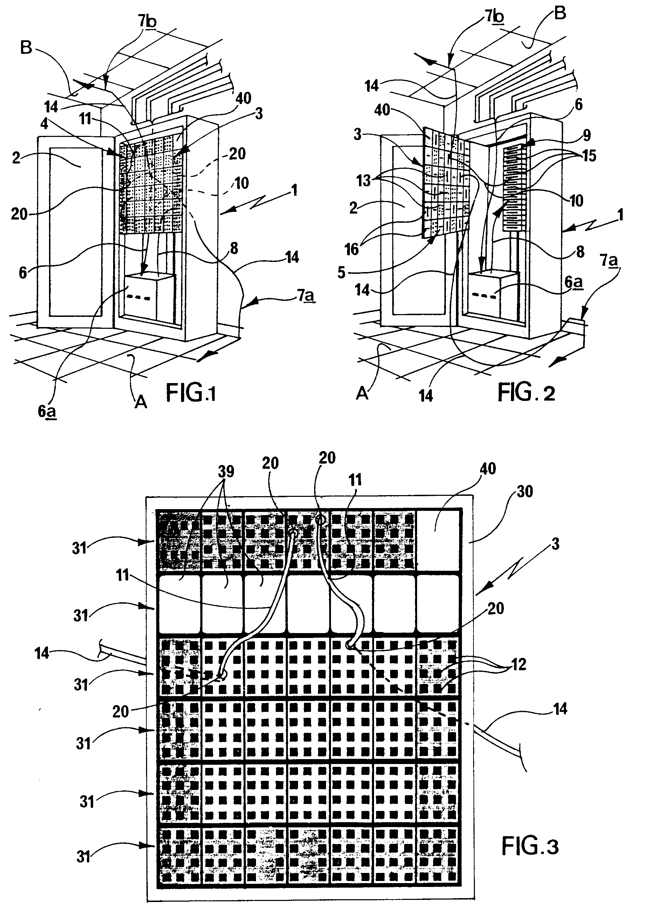

En se reportant aux figures 1 et 2, on voit qu'une installation conforme à l'invention comprend une armoire, ou "baie" 1 munie d'une porte 2 qui, lorsqu'elle est ouverte, laisse apparaître un tableau de 3 monté pivotant et présentant une face dite "avant" 4 et une face dite "arrière" 5.

Ces éléments sont destinés à établir des connexions entre un réseau extérieur désigné par la référence globale 6 et un réseau intérieur qui, ici, comprend deux parties distinctes, l'une 7a située sous un faux plancher A de tout type connu et l'autre 7b située au-dessus d'un faux plafond B également de tout type connu.

Le réseau extérieur 6 peut comprendre, en fait, un ou plusieurs réseaux différents : téléphone, vidéo etc. mais dans la description qui suit on fera allusion à un seul réseau extérieur pour des raisons de simplification.

Le réseau extérieur 6 aboutit à un boîtier de tout type connu 6a contenant toutes les connexions et composants électriques ou électroniques voulus.

De ce boîtier 6a, partent des câbles (un seul, 8, est représenté pour ne pas surcharger le dessin) qui comprennent un nombre plus ou moins grand de conducteurs individuels, formant des "paires" plus ou moins nombreuses lorsqu'il s'agit d'un réseau téléphonique. Chacun de ces câbles aboutit à l'un d'une série de boîtiers de connexion 9 auquel chacun des conducteurs individuels doit être raccordé au moyen d'autant de cosses conductrices.

Des câbles de jonction 10 relient les boîtiers 9 à la face arrière 5 du tableau 3. Sur la face avant 4 du tableau 3, se trouvent des conducteurs 11 qui relient entre elles deux prises normalisées 12, l'une correspondant à un câble de jonction 10 et l'autre à une prise normalisée 13 située sur la face arrière 5 du tableau 3 d'où un câble 14 part vers le réseau intérieur : soit vers sa partie inférieure 7a, soit vers sa partie supérieure 7b.

Tous les boîtiers de connexion 9 présentent une prise normalisée 15 et la face arrière 5 du tableau 3 présente aussi des prises normalisées 13 pour le départ des câbles 14, 16 pour des connecteurs des câbles de jonction 10. Les prises normalisées 13 et 16 de la face arrière 5 ne sont pas nécessairement identiques aux prises 15 des boîtiers de connexion 9 mais d'un ou plusieurs types différents. Les câbles de jonction 10 sont munis d'au moins un connecteur normalisé 17-18 à chacune de leurs extrémités. Pour un câble 10 donné, les connecteurs normalisés des deux extrémités peuvent être identiques ou différents.

Les prises normalisées 12 de la face avant sont identiques car elles doivent pouvoir recevoir indifféremment un connecteur de n'importe quel conducteur 11.

C'est pourquoi chaque conducteur 11 reçoit un connecteur 20 à chacune de ses deux extrémités. Tous les connecteurs 20 sont identiques, par exemple du type normalisé connu internationalement sous la référence "S".

Le tableau 3 est constitué par un cadre 30 portant des châssis 31 formés par une tôle découpée pour présenter autant de fenêtres que le châssis doit recevoir de modules 32, chacun de ceux-ci étant amovible individuellement, c'est-à-dire indépendamment des autres.

La face avant 4 et la face arrière 5 du tableau 3 sont formées par la juxtaposition des faces respectivement avant et arrière de tous les modules 32, ceux-ci étant groupés, ici, à raison de sept par châssis 31.

Les prises avant 12 d'une part et les prises arrière 13 et 16 d'autre part sont donc portées par les modules 32, respectivement sur leurs faces avant (formant ensemble la face avant 4 du tableau 3) et sur leurs faces arrière (formant ensemble la face arrière 5 du tableau 3).

La plupart des modules 32 comprennent un circuit spécifique 33 auquel sont raccordées les prises avant 12 et les prises arrière 13 et 16 afin que les prises avant 12 soient convenablement alimentées.

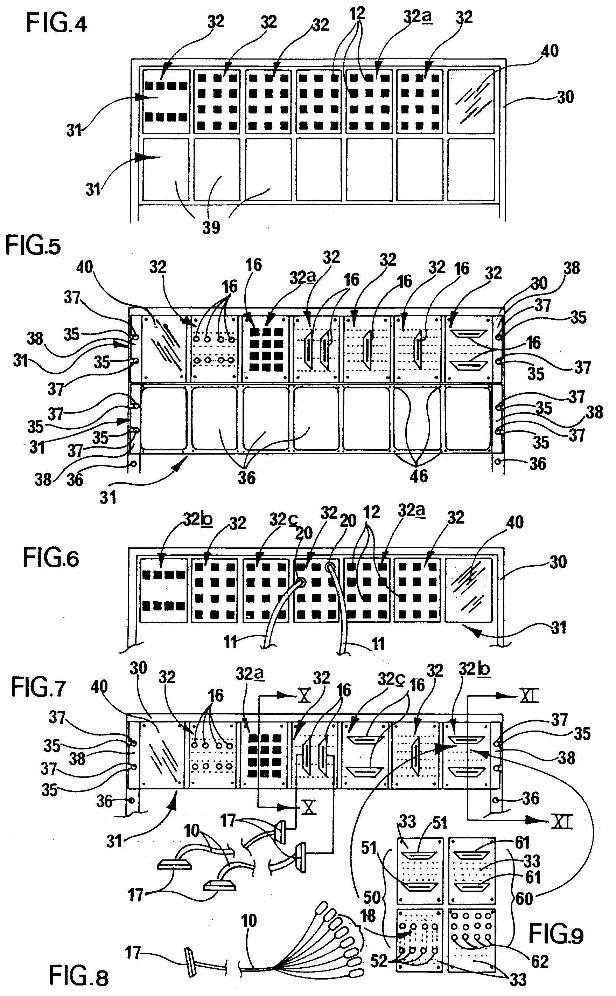

Lorsque les prises arrière 13-16 correspondent exactement aux prises avant 12 d'un même module 32, un circuit intermédiaire 33 est inutile, auquel cas les prises arrière et avant sont reliées directement. Cette disposition est apparente sur les figures 4 et 5, 6 et 7 et 10, sur lesquelles on a repéré 32a le module qui est dans ce cas.

Chacun des modules 32 recevant par leurs faces arrière des câbles de jonction 10 provenant de boîtiers de connexion 9 constitue une "ressource" car il est relié au réseau extérieur 6 (ou à l'un des réseaux extérieurs 6).

Chacun des modules 32 recevant par leurs faces arrière des câbles 14 constitue une "destination" car il est relié au réseau intérieur 7a ou 7b, c'est-à-dire à un appareil déterminé branché sur ce réseau intérieur.

Tous les modules 32 de ressource sont disposés à la périphérie du tableau 3 et tous les modules 32 de destination sont disposés au centre.

Sur les figures 1 et 3, on voit cette disposition car on a diversement grisé les modules 32 de ressource périphériques, alors que les modules 32 de destination, au centre, sont blancs.

Cela correspond pratiquement à la réalité car il est avantageux de donner aux modules 32 de ressource des couleurs qui les distinguent les uns des autres. On peut, par exemple, prévoir que les modules 32 correspondant à un réseau téléphonique sont de couleur jaune, que les modules 32 correspondant à un réseau télématique sont de couleur rouge etc.

Cette répartition des modules 32 de ressource et de destination a pour avantage, outre la simplicité de leur repérage, de permettre une liaison simple par les conducteurs 11 car il est facile d'éviter leur croisement, du fait qu'une liaison entre une ressource et une destination se fait toujours de la périphérie vers le centre et non pas de manière plus ou moins aléatoire comme c'est le cas actuellement.

En se reportant plus précisément à la figure 5, on voit que les châssis 31 possèdent des passages 35 situés en regard de trous taraudés 36 du cadre 30, des vis 37 étant engagées dans les passages 35 et vissées dans les trous 36.

Ici, les passages 35 sont constitués par des encoches prévues dans des ailes 38 débouchant sur les petits côtés des châssis 31 et oblongues afin de pouvoir ajuster très exactement la position précise des châssis 31 par rapport au cadre 30, les vis 37 pouvant s'étendre plus ou moins latéralement par rapport au châssis 31 losqu'elles sont vissées dans les trous taraudés 36.

Chaque châssis 31 est formé par un panneau rectangulaire traversé de fenêtres 39 et chacun des modules 32 est placé en regard de l'une de ces fenêtres 39.

Ce montage, châssis par châssis, permet de constituer les tableau 3 quel que soit le nombre des modules 32 effectivement installés.

Ici, on a supposé que le tableau 3 est formé par la superposition de six châssis 31. Le premier, situé le long du bord supérieur du cadre 30, porte six modules 32; le deuxième châssis, situé immédiatement sous le premier, ne porte aucun module et présente donc ses fenêtres 39 vides; les quatre autres portent chacun sept modules 32.

Un tel cas est plutôt théorique et ne sert ici qu'à la compréhension de l'invention.

On remarque que le premier châssis 31 possède sept fenêtres 39 et ne porte que six modules 32. La fenêtre 39 située à l'extrémité droite de ce premier châssis 31 est masquée par une plaque 40 fixée à la face arrière de ce châssis comme un module 32, ce qui donne au tableau 3 une bonne présentation et isole l'intérieur de la baie 1.

Les modules 32, quant à eux, possèdent tous une plaque frontale 41 percée d'autant de passages qu'il y a de prises avant 12. Ici, toutes les prises avant ayant un pourtour carré, les passages des plaques 41 ont également un pourtour carré. Les plaques 41 sont rectangulaires, un peu plus grandes que les fenêtres 39 des châssis 31 afin qu'elles prennent appui sur le pourtour de la face arrière de ces fenêtres 39.

Pour distinguer les modules de ressource placés autour des modules de destination (figures 1 et 3) en leur donnant des couleurs différentes, ce sont les plaques 41 qui sont colorées, les prises 12 ayant toutes la même couleur, généralement noire.

Chaque module 32 doit être fixé au châssis 31. A cet effet, chaque module 32 comprend une plaque et lorsqu'il s'agit du type de module selon lequel il y a un circuit intermédiaire 33 entre les prises arrière 13-16 et les prises avant 12, la plaque de fixation est la plaque sur laquelle se trouve le circuit. Lorsqu'il s'agit du type de module selon lequel il n'y a pas de circuit intermédiaire, la plaque de fixation est une plaque 45 qui sert de socle aux prises.

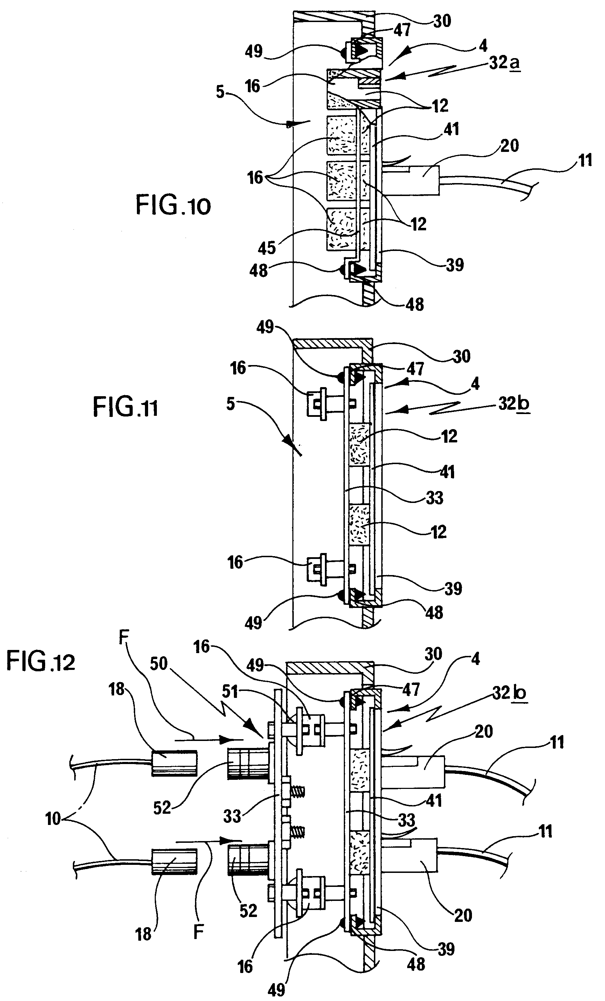

La fixation par une plaque de circuit 33 apparaît sur les figures 11 et 12 et la fixation par une plaque 45 apparaît sur la figure 10.

Dans les deux cas, les plaques de fixation sont percées de trous prévus à leur périphérie selon une distribution correspondant à celle de trous 46 (figure 5) ménagés dans deux rebords longitudinaux 47 et 48 (figures 10 à 12) des châssis 31. La fixation est obtenue en engageant des pions en matière synthétique 49 sensiblement en forme de harpon, de type connu. L'intérêt de ces pions est d'assurer une fixation énergique et sans jeu, par une mise en place immédiate et sans aucun réglage. Le démontage se fait en brisant les pions 49 dont le prix est tout-àfait négligeable.

Selon une caractéristique intéressante de l'invention, il est possible de réaliser une adaptation des prises arrière en fonction des exigences de la destination.

Les figures 7 à 9 illustrent cette possibilité.

Sur la figure 7, on voit que le module repéré 32b situé à droite en considérant la face arrière, possède deux prises arrière 16 normalisées ****** associées à un circuit adapté à l'alimentation de huit prises avant 12 normalisées ******, ainsi que cela se voit sur la figure 6, à gauche en considérant la face avant.

Cette disposition des prises avant 12 correspond à un appareil, ou à une sorte d'appareils. Si l'on est amené à associer ce même module 32b à un appareil différent qui nécessite à la fois les mêmes prises avant 12 et des prises arrière différentes, on utilise un module spécifique 50, dit module "d'adaptation" lui aussi amovible individuellement et, donc interchangeable, spécialement conçu pour cette adaptation.

Sur la figure 8, on a représenté les deux faces avant et arrière de ce module d'adaptation 50. Sa face avant possède deux connecteurs 51 adaptés aux prises 16 du module 32b tandis que sa face arrière présente huit prises normalisées 52, conçues pour recevoir des connecteurs 18 de type coaxial.

Pour mettre en place le module d'adaptation 50, on retire les connecteurs 17 d'origine et on les remplace par des connecteurs 18. On applique le module d'adaptation 50 contre la face arrière du module 32b en engageant ses connecteurs 51 dans les prises 16 et l'on branche les connecteurs 18 dans les prises 52 selon les flêches F de la figure 12. Cette disposition est représentée sur la figure 12.

Sur la figure 9, on a représenté un autre module d'adaptation 60 dont la face avant présente deux connecteurs 61 pour les mêmes prises 16 du même module 32b et la face arrière douze prises 62 de type coaxial. Ce module d'adaptation 60 suppose que l'on a toujours besoin des prises avant 12 et de douze prises coaxiales 62 au lieu de huit avec le module d'adaptation 50. En réalité, s'il est nécessaire d'avoir douze prises arrière 62, c'est en raison de la nécessité de disposer également de douze prises avant 12. La représentation schématique des figures 7, 8 et 9 a pour but de montrer que l'on peut prévoir différents modules d'adaptation sur la face arrière d'un même module 32 mais dans le cas précis que l'on vient d'évoquer, le module d'adaptation 50 correspond en effet au module 32b alors que le module d'adaptation 60 correspond plutôt au module repéré 32c qui possède bien deux prises arrière 16 et douze prises avant 12 (figures 7 et 6).

Les modules d'adaptation 50 et 60 possèdent une plaque portant un circuit 33 spécifiquement adapté à l'alimentation correcte des prises avant à partir des connecteurs des câbles 10, des prises arrière du module d'adaptation, des connecteurs avant du même module d'adaptation, des prises arrière du module en place et enfin du circuit 33 du même module en place.

## Revendications

1. Installation pour la connexion d'appareils déplaçables tels qu'ordinateurs, récepteurs vidéo, combinés téléphoniques et autres, à un réseau fixe dit "intérieur" de conducteurs devant aboutir chacun à une prise éloignée destinée à l'un desdits appareils, alimenté par au moins un réseau fixe dit "extérieur" tel qu'un réseau téléphonique, un réseau câblé de vidéo et autres,
- du type comprenant une enceinte dans laquelle se trouve un tableau monté pivotant ayant une face dite "avant" et une face dite "arrière", tableau qui est constitué par un cadre devant porter des châssis destinés à recevoir des modules formés chacun par un support ayant deux faces opposées, l'une dite "face avant" et l'autre "face arrière", ces deux faces portant chacune au moins une prise pour un connecteur,
- caractérisée en ce que chaque châssis (31) porte plusieurs modules individuels (32) qui sont amovibles indépendamment les uns des autres et qui comprennent chacun :
. sur leur face arrière (5) au moins une prise (13-16) pour au moins un connecteur (17-18) situé à l'extrémité d'un câble (10-14), relié soit au réseau extérieur (6), en vue d'alimenter un module individuel (32) déterminé et constituant une "ressource", soit au réseau intérieur (7a-7b), en vue du raccordement d'un connecteur et constituant une "destination",
. sur leur face avant (4) des prises (12) pour des connecteurs (20) situés aux extrémités de conducteurs (11) destinés à relier entre elles deux desdites prises (12) de la face avant (4), dont l'une est située sur un module (32) de ressource et l'autre sur un module (32) de destination,
les prises (12) de la face avant (4) de chaque module individuel (32) étant reliées aux prises (13-16) de la face arrière (5) du même module individuel (32) soit directement, soit par au moins un circuit spécifique (33), de telle manière que les modules (32) reliés au réseau extérieur (6) et les modules (32) reliés au réseau intérieur (7a-7b) constituent deux groupes disposés concentriquement l'un à l'autre, à l'intérieur du cadre (30) du tableau (3).

2. Installation selon la revendication 1, caractérisée en ce que les châssis (31) sont traversés de passages (35) devant recevoir des organes amovibles tels que des vis (37) pour leur fixation au cadre (30) du tableau (3) quel que soit le nombre de modules (32) qu'ils portent effectivement.

3. Installation selon la revendication 2, caractérisée en ce que les châssis (31) sont constitués par des panneaux rectangulaires
. ayant une face avant et une face arrière,
. qui sont traversés de fenêtres (39) de dimensions voulues pour laisser apparaître chacune la face avant (4) d'un module (32) susceptible d'être placé contre la face arrière desdits châssis (31)
. et qui présentent deux ailes latérales (38) devant être appliquées contre deux bords opposés du cadre (30) du tableau (3), ces ailes (38) étant traversées par les passages (35) des organes amovibles (37).

4. Installation selon la revendication 1, caractérisée en ce que chaque module (32) possède une plaque (33-45) traversée de trous et les châssis (31) présentent des rebords (48) également traversés de trous (46) disposés de telle manière que des trous des plaques (33-45) soient situés en regard de trous (46) des rebords (48), afin de livrer passage à des organes de fixation (49).

5. Installation selon la revendication 4, caractérisée en ce que la plaque (33) des modules (32) porte un circuit du genre dit "circuit imprimé" constituant le circuit individuel de chaque module (32).

6. Installation selon la revendication 1, caractérisée en ce que certains au moins (32b-32c) des modules en place (32) comportent sur leur face arrière (5) des prises (16) destinées à des connecteurs (51-61) solidaires non de câbles mais de la face avant d'un module (50-60) dit "d'adaptation" dont la face arrière est munie de prises (52-62), afin de pouvoir placer sélectivement sur la face arrière de ces modules en place (32b-32c) des modules d'adaptation (50-60) interchangeables dont le circuit (33) et les prises (52-62) sont adaptés aux appareils devant être alimentés à partir de ces modules en place (32).

7. Installation selon la revendication 3, caractérisée en ce que chacune des fenêtres (39) de châssis (31) démunie de module (32), est masquée par une plaque d'obturation (40) fixée de manière amovible sur la face arrière du châssis (31), par les mêmes moyens (46 à 49) que ceux utilisés pour fixer un module (32).
